# EUROPEAN PATENT SPECIFICATION

(11) **EP 2 715 157 B1**
(45) Date of publication and mention of the grant of the patent: **05.09.2018**
(21) Application number: 12725577.6
(22) Date of filing: 23.05.2012
(51) Int. Cl.: F16B 15/00, F16B 35/00

(54) **FASTENER IDENTIFICATION MARKING**
KENNZEICHNUNG EINES BEFESTIGUNGSELEMENTS
REPÈRE D'IDENTIFICATION D'ATTACHE

(30) Priority: 24.05.2011 US 201113114926
(43) Date of publication of application: 09.04.2014
(73) Proprietor: Illinois Tool Works Inc., Glenview, IL 60025 (US)
(72) Inventor: JABLONSKI, David, W., Glenview, IL 60025 (US); ROXBURGH, John Jason, Glenview, IL 60025 (US); HEFLIN, William M., Glenview, IL 60025 (US)
(74) Representative: HGF Limited
(86) International application number: PCT/US2012/039054
(87) International publication number: WO 2012/162344

(56) References cited:
- DE-U1- 29 801 019
- DE-U1-202006 017 309
- FR-A- 750 884
- US-A1- 2002 187 019
- US-A1- 2004 115 022

## Description

### BACKGROUND OF THE INVENTION

Certain applications require use of a power driven fastener to attach a first object, such as a metal bracket, to a second object, such as a concrete wall. After a fastener is embedded through the first object and into or through the second object, by an installer, an interested third party such as a contractor or a building inspector, does not know the actual length or the embedment depth of the fastener into the second object. Being that a power driven fastener is intended to be a permanent fastening, the embedded fastener may need to be removed, possibly causing damage to the first object, the second object, or the fastener itself, in order to verify the actual length or the embedment depth of the fastener.

It would therefore be desirable to allow interested parties to determine the actual length or the embedment depth of a power driven fastener after installation without having to remove the fastener, and possibly causing damage to the first object, the second object, or the fastener itself.

US patent application publication number 2002/0187019 describes a method of indicating the gauge and length of a nail on the nail itself. German patent application publication number 202006017309U1 describes threaded machine parts having markings on non-threaded areas indicating the thread type.

### SUMMARY

Aspects of the invention are set out in the appended claims.

### BRIEF DESCRIPTION OF THE DRAWINGS

The invention can be better understood with reference to the following drawings and description. The components in the figures are not necessarily to scale, emphasis instead being placed upon illustrating the principles of the invention.
FIG. 1 depicts a first perspective view of a first fastener having an identification marking formed on a head of the fastener, in accordance with one embodiment;
FIG. 2 depicts a second perspective view of the fastener shown in FIG. 1, in accordance with one embodiment;
FIG. 3 depicts a first perspective view of a second fastener having an identification marking formed on a head of the fastener, in accordance with one embodiment; and
FIG. 4 depicts a side cross-sectional view of the first fastener driven through a first object and embedded within a second object, in accordance with one embodiment.

### DETAILED DESCRIPTION

Systems consistent with the present invention overcome the disadvantages of conventional fasteners by using a fastener which has an identification marking on an outer surface of the fastener's head. The identification marking preferably indicates a physical property of the fastener. By viewing the identification marking on the outer surface of the fastener's head, which is visible even after installation of the fastener, interested parties may now determine the actual length or the embedment depth of a power driven fastener after installation without having to remove the fastener, and possibly causing damage to the first object, the second object, or the fastener itself.

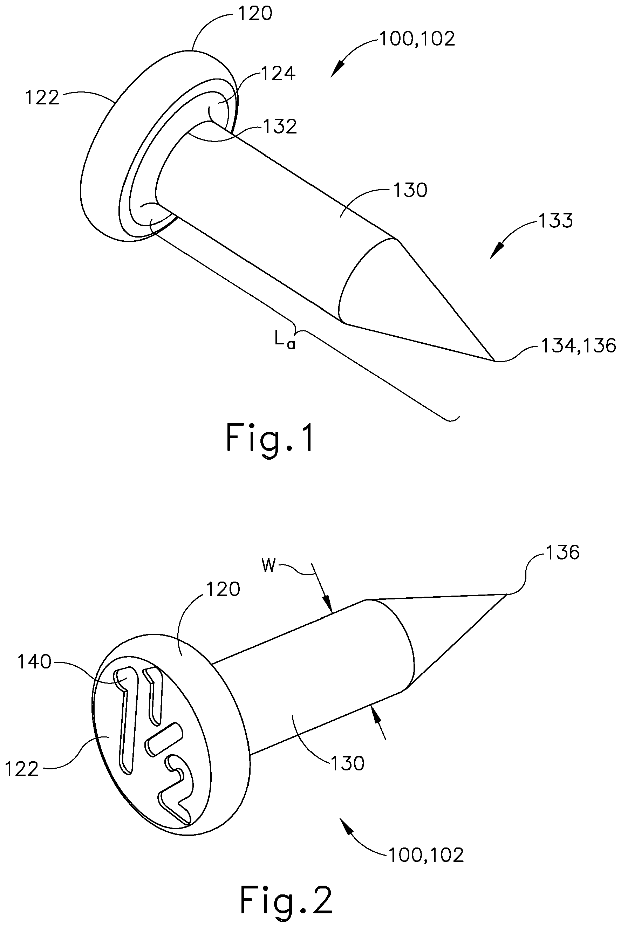

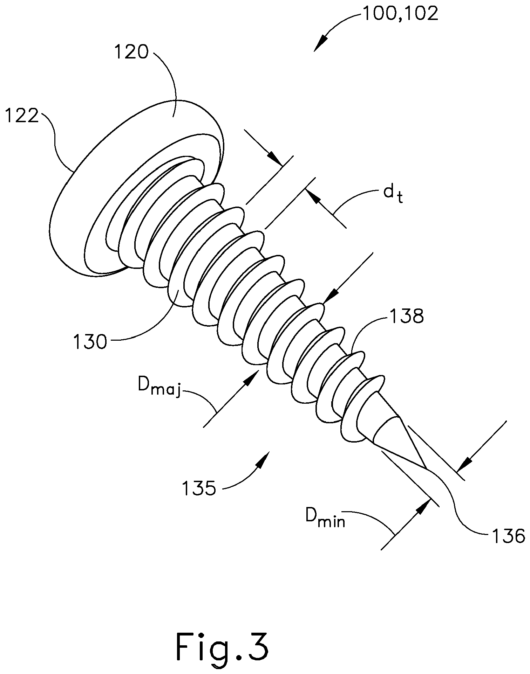

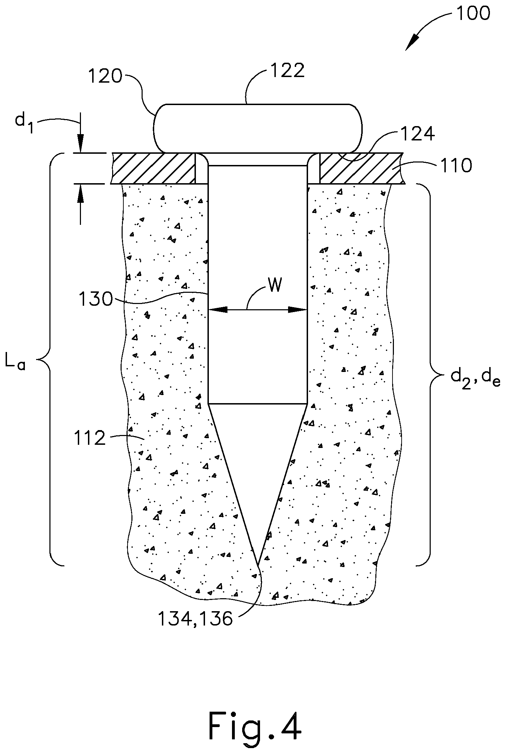

With reference to FIGS. 1, 2 and 4, there is shown one embodiment of a fastener 100 having an identification marking 140 formed on a head 120 of the fastener 100. Fastener 100 is any device which can be inserted into or through a first object 110 and then inserted into or through a second object 112, in order to secure or fasten the first object 110 to the second object 112, as shown in FIG. 4. Fastener 100 is a hardware device that mechanically joins or affixes two or more objects 110, 112 together. Fastener 100 can also be used to close a container such as a bag, a box, or an envelope; or fastener 100 may involve keeping together the sides of an opening of flexible material, attaching a lid to a container, etc. Examples of fastener 100 include a nail 133 as shown in FIG. 1, a screw 135 as shown in FIG. 3, a masonry anchor, a peg, a pin, a rivet, a tack, a threaded fastener, or a captive threaded fastener. Preferably, the fastener 100 has a one-piece structure a screw or a nail, and not a two-piece structure, such as a masonry anchor.

With reference to FIG. 3, in one embodiment the fastener 100 is a screw 135 having threads 138 having peaks and valleys on the shank 130, with a distance dₜ between peaks of threads 138 on the shank 130. In this embodiment, the shank 130 includes a major diameter Dₘₐⱼ along the peaks of threads 138 on the shank 130, and a minor diameter Dₘᵢₙ along the valleys of threads 138 on the shank 130.

Fastener 100 may be a manually inserted fastener 104, as shown in FIG. 3, which uses only human power to insert the manually inserted fastener 104 into or through the first or second object 110, 112 using a non-powered tool or hand tool, such as a screw driver or a conventional hammer. In one embodiment, with reference to FIGS. 1, 2 and 4, fastener 100 is a power driven fastener 102 which uses non-human power to drive the fastener 102 into or through the first or second object 110, 112 using a power tool. A power tool is a tool which is powered by an electric motor, an internal combustion engine, a steam engine, compressed air, direct burning of fuels and propellants, or even natural power sources like wind or moving water. In one embodiment, a power tool employing an explosive charge is used to drive the power driven fastener 102 into or through the first or second object 110, 112.

First or second objects 110, 112 are any objects into which a fastener 100 can be inserted into and are preferably objects used in construction to construct a building or home, such as a concrete slab, a piece of wood, a piece of metal, a bracket, a stud, a shelf, a floor, a wall, carpet, flooring, glass, stone, rubber, plastic, and drywall.

The fastener 100 includes the head 120 having an outer surface 122 opposed to an inner surface 124, a shank 130 connected with the head 120, and the identification marking 140 formed on the head 120. The head 120 is the portion of the fastener 100 through which a force is typically applied in order to insert the shank 130 of the fastener 100 into or through first or second objects 110, 112. Preferably, the outer surface 122 of the head 120 remains exposed upon the fastener 100 being inserted into or through first or second objects 110, 112, while the inner surface 124 and the shank 130 are typically hidden with the first or second objects 110, 112.

The shank 130 is connected with the inner surface 124 of the head 120 at a first end 132 of the shank 130 and has a second end 134 opposed to the first end 132. The shank 130 has an actual length Lₐ linearly measured from the first end 132 to the second end 134. Preferably, the actual length Lₐ of the shank 130 is equal to or greater than the sum of the first depth d₁ and the second depth d₂. Preferably, the shank 130 forms a tip 136 at the second end 134 to allow to easier insertion of the shank 130 into the first or second objects 110, 112.

With reference to FIG. 4, fastener 100 is inserted into or through a first object 110 a first depth d₁ and then inserted into or through a second object 112 a second depth d₂, in order to secure or fasten the first object 110 to the second object 112, as shown in FIG. 4. Preferably, the combination of the first depth d₁ and the second depth d₂ is approximately is approximately equal to, within ±10%, the actual length Lₐ of the shank 130 of the fastener 100.

With reference to FIG. 2, identification marking 140 is formed, and displayed on the outer surface 122 of the head 120. The identification marking 140 indicates a physical property of the fastener 100.

In one example that helps to illustrate the invention, the identification marking 140 indicates a representative length Lᵣ of the fastener 100. The representative length Lᵣ of the fastener 100 is any length of measurement which represents a length of the fastener 100 or an embedment depth into a first or second object 110, 112 for the fastener 110, and includes things such as the actual length Lₐ of the shank 130, the entire length L of the fastener 100 from the outer surface 122 to the tip 136, or an embedment depth dₑ of the fastener 100. In one embodiment, the identification marking 140 indicates an embedment depth de of the fastener 100. The embedment depth dₑ of the fastener 100 is the depth d₂ which the fastener 100 is embedded into the second object 112. The embedment depth dₑ is approximately equal to, within ±10%, the actual length Lₐ minus the first depth dₜ. Preferably, the embedment depth de is approximately equal to, within ±10%, the second depth d₂. In one embodiment, the representative length Lᵣ of the fastener 100 is within ±20% the actual length Lₐ of the shank 130.

Preferably, the identification marking 140 is stamped into the outer surface 122, however, the identification marking 140 may also be displayed on the outer surface 122 in any one of a number of ways, including being printed onto the outer surface 122 or engraved into the outer surface 122. By having an identification marking 140 on the outer surface 122 of the head 120, interested parties are allowed to determine the actual length Lₐ or the embedment depth dₑ of a fastener 100 after installation without having to remove the fastener 100, and possibly causing damage to the first object 110, the second object 112, or the fastener 100 itself.

In use, the fastener 100 is inserted, with a power tool, through the first object 110, and preferably, into or through the second object 112, by an installer. Upon insertion, the installer, an interested third party such as a contractor or a building inspector, then views the identification marking 140 on the outer surface 122 of the head 120, which is visible even after installation of the fastener 100 in first object 110, and preferably, second object 120, and then determines the actual length or the embedment depth of a power driven fastener after installation without having to remove the fastener 100.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

While various embodiments of the invention have been described, it will be apparent to those of ordinary skill in the art that other embodiments and implementations are possible within the scope of the invention. Accordingly, the invention is not to be restricted except in light of the attached claims and their equivalents.

## Claims

1. A system comprising a first object (110) having a first depth d₁ and a power driven fastener (102) for being inserted through said first depth d₁ of said first object and a second depth d₂ into a second object (112) with a power tool, said fastener comprising:
a head (120) having an outer surface (122) opposed to an inner surface (124), wherein the outer surface remains exposed upon the fastener being inserted into the first and second objects;
a shank (130) connected with the inner surface of the head at a first end (132) and forming a tip (136) at a second end (134) opposed to the first end, wherein the shank has an actual length Lₐ from the first end to the second end, and wherein the actual length Lₐ is equal to the sum of the first depth d₁ and the second depth d₂; and
an identification marking (140) formed on the outer surface, wherein the identification marking indicates an embedment depth dₑ of the fastener which is approximately equal to, within ±10%, the actual length Lₐ minus the first depth d₁.

2. The fastener of claim 1, wherein the fastener is one of a screw or a nail.

3. The fastener of claim 1, wherein the identification marking is stamped into the outer surface.

## Patentansprüche

1. System, umfassend ein erstes Objekt (110) mit einer ersten Tiefe d₁ und einem durch Kraftantrieb eingetriebenen Befestigungselement (102) zum Einführen durch die erste Tiefe d₁ des ersten Objekts und eine zweite Tiefe d₂ in ein zweites Objekt (112) mit einem kraftbetriebenen Werkzeug, wobei das Befestigungselement Folgendes umfasst:
einen Kopf (120) mit einer Außenfläche (122) gegenüber einer Innenfläche (124), wobei die Außenfläche beim Einführen des Befestigungselements in das erste und zweite Objekt freiliegend bleibt;
einen Schaft (130), der an einem ersten Ende (132) mit der Innenfläche des Kopfs verbunden ist und an einem dem ersten Ende gegenüberliegenden zweiten Ende (134) eine Spitze (136) bildet, wobei der Schaft eine tatsächliche Länge Lₐ von dem ersten Ende zu dem zweiten Ende aufweist, und wobei die tatsächliche Länge Lₐ gleich der Summe der ersten Tiefe d₁ und der zweiten Tiefe d₂ ist; und
eine Kennzeichnung (140), die an der Außenfläche gebildet ist, wobei die Kennzeichnung eine Einbettungstiefe dₑ des Befestigungselements anzeigt, die innerhalb von +10% ungefähr gleich der tatsächlichen Länge Lₐ minus der erste Tiefe d₁ ist.

2. Befestigungselement nach Anspruch 1, wobei das Befestigungselement eine Schraube oder ein Nagel ist.

3. Befestigungselement nach Anspruch 1, wobei die Kennzeichnung in die Außenfläche gestanzt ist.

## Revendications

1. Système comprenant un premier objet (110) présentant une première profondeur d₁ et une attache à entraînement mécanique (102) à insérer à travers ladite profondeur d₁ dudit premier objet et à travers une seconde profondeur d₂ dans un second objet (112) à l'aide d'un outil mécanique, ladite attache comprenant:
une tête (120) présentant une surface extérieure (122) opposée à une surface intérieure (124), dans lequel la surface extérieure reste exposée lorsque l'attache est insérée dans les premier et second objets;
une tige (130) qui est connectée à la surface intérieure de la tête à une première extrémité (132) et qui forme une pointe (136) à une seconde extrémité (134) opposée à la première extrémité, dans lequel la tige présente une longueur réelle Lₐ entre la première extrémité et la seconde extrémité, et dans lequel la longueur réelle Lₐ est égale à la somme de la première profondeur d₁ et de la seconde profondeur d₂; et
un repère d'identification (140) formé sur la surface extérieure, dans lequel le repère d'identification indique une profondeur d'encastrement dₑ de l'attache qui est approximativement égale à, avec une marge de ± 10 %, la longueur réelle Lₐ moins la première profondeur d₁.

2. Attache selon la revendication 1, dans lequel l'attache est soit une vis, soit un clou.

3. Attache selon la revendication 1, dans lequel le repère d'identification est estampé dans la surface extérieure.
